# EUROPÄISCHE PATENTANMELDUNG

(11) **EP 4 799 787 A2**
(43) Veröffentlichungstag der Anmeldung: **02.09.2026**
(21) Anmeldenummer: 25221776.5
(22) Anmeldetag: 09.12.2025
(51) Int. Cl.: B29C 37/00, B29D 30/06, B29D 30/56, B29D 30/54

(54) **VERFAHREN ZUM HERAUSLÖSEN VON LAUFSTREIFEN AUS VULKANISATIONSFORMEN**

(30) Priorität: 11.12.2024 DE 102024211821
(71) Anmelder: Continental Reifen Deutschland GmbH, 30175 Hannover (DE)
(72) Erfinder: Camaj, Michal, 020 01 Púchov (SK); Vojtus, Michal, 020 01 Púchov (SK)
(74) Vertreter: Continental Corporation

(57) **Zusammenfassung**

Die Erfindung betrifft ein Verfahren zum Herauslösen von zumindest teilweise vulkanisierten Laufstreifen (10) aus einer Vulkanisationsform (12) mit einer Saugvorrichtung (14), wobei die Saugvorrichtung (14) umfasst: i) einen Grundkörper (16) mit einer Funktionsseite (18), die eine Vielzahl von Ansaugöffnungen (20) aufweist, wobei der Grundkörper (16) eine Vielzahl an Luftkanälen (22) aufweist, welche sich durch den Grundkörper (16) erstrecken und mit den Ansaugöffnungen (20) verbunden sind, und ii) eine fluidleitend mit den Luftkanälen (22) verbundene Unterdruckerzeugungseinheit (24) zur Erzeugung eines Unterdrucks an den Ansaugöffnungen (20), umfassend die Verfahrensschritte: a) Bereitstellen oder Herstellen eines zumindest teilweise vulkanisierten Laufstreifens (10) in einer Vulkanisationsform (12), b) Anordnen der Saugvorrichtung (14) an dem Laufstreifen (10), sodass die Funktionsseite (18) des Grundkörpers (16) den Laufstreifen (10) zumindest abschnittsweise kontaktiert, c) Ausbilden einer reversibel und zerstörungsfrei lösbaren Verbindung zwischen der Funktionsseite (18) und dem Laufstreifen (10) durch Beaufschlagen der Ansaugöffnungen (20) mit einem Unterdruck mittels der Unterdruckerzeugungseinheit (24), und d) Herauslösen des Laufstreifens (10) aus der Vulkanisationsform (12) durch Verfahren des Grundkörpers (16) der Saugvorrichtung (14) relativ zur Vulkanisationsform (12).

## Beschreibung

Die Erfindung betrifft ein Verfahren zum Herauslösen von Laufstreifen aus Vulkanisationsformen sowie eine für den Einsatz in dem Verfahren besonders geeignete Vulkanisationsanlage. Offenbart wird zudem eine Verwendung einer Saugvorrichtung beim Herauslösen von Laufstreifen zur Vermeidung von Beschädigungen an Vulkanisationsformen und an mit den Vulkanisationsformen hergestellten Laufstreifen.

Im Bereich der Fahrzeugtechnik und Fahrzeugreifen und hierbei insbesondere in der Fahrzeugreifenfertigung, wurden in den letzten Jahren zunehmend höhere Anforderungen an die Fertigungsprozesse gestellt, insbesondere auch mit Blick auf eine vorteilhafte Verfahrensökonomie sowie einen nachhaltigen Umgang mit den bestehenden Ressourcen. Im Zuge dessen werden heutzutage viele Fahrzeugreifen mehrfach benutzt, um ihren Lebenszyklus zu erhöhen und insoweit dem zunehmenden Bedürfnis nach einem ökologischerem Wirtschaften Rechnung zu tragen. Die Herstellung von modernen Fahrzeugreifen ist ein aufwendiges und relativ kostenintensives Verfahren, bei dem regelmäßig erhebliche Mengen an wertvollen Rohstoffen eingesetzt werden müssen. Aus diesem Grund wurden Verfahren zur Runderneuerung von Altreifen entwickelt, mit denen es möglich ist, große Teile von Altreifen wiederzuverwerten und insoweit auch die durch die Reifenherstellung anfallende Umweltbelastung zu minimieren. Die bekannten Verfahren zur Runderneuerung basieren im Wesentlichen darauf, dass der alte, zumeist verschlissene Laufstreifen abgetragen wird, sodass ein neuer Laufstreifen auf die unterliegende Karkassenoberfläche aufgebracht werden kann.

Unter den Verfahren zur Runderneuerung kommt insbesondere der sogenannten kalten Runderneuerung ("cold retread") eine besondere Bedeutung zu. In diesem Verfahren wird der alte Laufstreifen des Altreifens von der Karkasse ("casing") abgetragen, beispielsweise durch Schleifen. Dadurch bleibt ein Altreifen zurück, dessen mit Gummi belegte Karkassenoberfläche aufgeraut ist. Kennzeichnend für die kalte Runderneuerung ist, dass die neuen Laufstreifen hierbei vorvulkanisiert ("pre-cured") werden, sodass sie im kalten Runderneuerungsprozess, wie er beispielsweise in Kaltrunderneuerungswerken (sogenannten "retread shops") durchgeführt wird, auf die Casings aufgebracht werden können. Die belastbare Verbindung zwischen dem Altreifen und dem neuen Laufstreifen wird durch ein geeignetes Haftmittel gewährleistet, welches eine stoffschlüssige Verbindung zwischen den beiden Komponenten erzeugt. Dies erfolgt beispielsweise durch eine Vulkanisation eines schwefelhärtbaren Haftmittels, beispielsweise einer Kautschukmischung.

In vielen Fällen werden die für die kalte Runderneuerung benötigten vorvulkanisierten Laufstreifen in eigens hierfür konzipierten Vulkanisationsvorrichtungen hergestellt, welche dazu eingerichtet sind, vorvulkanisierte Laufstreifenstränge mit einer Länge von mehreren Metern herzustellen, wobei aus einem derart vorvulkanisierten Laufstreifenstrang zwei oder mehr Laufstreifen für Fahrzeugreifen vereinzelt werden können, sodass die Herstellung vorvulkanisierter Laufstreifen für die kalte Runderneuerung von Fahrzeugreifen besonders effizient erfolgen kann.

Im Stand der Technik wird dabei vorgeschlagen, den Laufstreifen aus der Vulkanisationsform zu lösen, indem er - ähnlich wie ein Klebestreifen beim Abziehen von einem Substrat - an einer der in Bahnrichtung des Laufstreifens außengelegenen Seiten fixiert und anschließend durch einen Zug in Bahnrichtung aus der Vulkanisationsform herausgelöst wird. Insoweit wird es allerdings häufig als nachteilig angesehen, dass es bei dem Herausziehen des Laufstreifens zu Beschädigungen an der den Laufstreifen ausformenden Vulkanisationsform kommen kann, beispielsweise zu Verbiegungen von Strukturelementen, insbesondere Strukturelementen mit einer Breite von 3 mm oder weniger. Bei nachgelagerten Vulkanisationsprozessen können derartige Beschädigungen an der Vulkanisationsform dazu führen, dass das ausgeformte Produkt eine ungenügende Qualität aufweist, beispielsweise ein fehlerhaft ausgestaltetes Laufstreifenprofil, sodass im schlimmsten Fall das resultierende Produkt entsorgt werden muss. Insoweit können entsprechende Beschädigungen an der Vulkanisationsform erhebliche Reparatur- und Wartungsmaßnahmen nach sich ziehen und insoweit einen regelmäßigen Austausch der Vulkanisationsform als Ganzes, oder zumindest von Teilen der Vulkanisationsform, erforderlich machen.

Überdies wird es oftmals als nachteilig nagesehen, dass es beim Herausziehen des vorvulkanisierten Laufstreifens außerdem zu Beschädigungen am Laufstreifen selbst kommen kann, insbesondere zu Mikrorissen im Laufstreifen. Dies kann darin resultieren, dass der vorvulkanisierte Laufstreifen, zumindest abschnittsweise, erhebliche Qualitätsmängel aufweist, wobei ein mangelhafter Laufstreifen, welcher in der kalten Runderneuerung von Fahrzeugreifen Verwendung findet, entsprechend auch oftmals in einem im Vergleich zu neuen Fahrzeugreifen minderwertigem runderneuerten Fahrzeugreifen mit schlechteren Fahreigenschaften resultiert, was wiederum die Nutzerakzeptanz entsprechender runderneuerter Fahrzeugreifen negativ beeinflussen kann.

Die primäre Aufgabe der vorliegenden Erfindung war es, die Nachteile des Standes der Technik auszuräumen oder zumindest zu verringern.

Insbesondere war es die Aufgabe der vorliegenden Erfindung, ein Verfahren zum Herauslösen von zumindest teilweise vulkanisierten Laufstreifen aus einer Vulkanisationsform anzugeben, welches ein besonders schonendes Herauslösen des Laufstreifens aus der Vulkanisationsform im Vergleich zum Stand der Technik ermöglichen sollte, sodass Beschädigungen an der Vulkanisationsform und dem vorvulkanisierten Laufstreifen stark reduziert werden können sollten.

Es war auch eine Aufgabe der vorliegenden Erfindung, dass das anzugebende Verfahren in bestehende Prozesse möglichst gut integrierbar sein sollte. Hierbei war es eine wünschenswerte Vorgabe, dass das anzugebende Verfahren möglichst einfach und kosteneffizient in bestehende Prozesse integrierbar sein sollte, sodass insbesondere bereits vorhandene Komponenten für das Verfahren genutzt werden können sollten.

Es war ebenfalls eine Aufgabe der vorliegenden Erfindung, dass das anzugebende Verfahren mit einem möglichst niedrigen apparativen Aufwand durchführbar sein sollte.

Die vorstehend genannten Aufgaben werden durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Vulkanisationsanlagen und Verwendungen ergeben sich aus den Merkmalen bevorzugter Verfahren.

Insbesondere bevorzugte Ausführungsformen der Erfindung sind in den Ausführungsbeispielen offenbart. Besonders bevorzugte Ausführungsformen der Erfindung weisen entsprechend zwei oder mehr, bevorzugt drei oder mehr, ganz besonders bevorzugt vier oder mehr, der nachfolgend offenbarten bevorzugten Merkmale der Erfindung auf, welche auch in den Ausführungsbeispielen realisiert sind.

Die Erfindung betrifft ein Verfahren zum Herauslösen von zumindest teilweise vulkanisierten Laufstreifen aus einer Vulkanisationsform mit einer Saugvorrichtung, wobei die Saugvorrichtung umfasst:
i) einen Grundkörper mit einer Funktionsseite, die eine Vielzahl von Ansaugöffnungen aufweist, wobei der Grundkörper eine Vielzahl an Luftkanälen aufweist, welche sich durch den Grundkörper erstrecken und jeweils mit zumindest einer der Ansaugöffnungen verbunden sind, und
ii) eine fluidleitend mit den Luftkanälen verbundene Unterdruckerzeugungseinheit zur Erzeugung eines Unterdrucks an den Ansaugöffnungen,
umfassend die Verfahrensschritte:
a) Bereitstellen oder Herstellen eines zumindest teilweise vulkanisierten Laufstreifens in einer Vulkanisationsform,
b) Anordnen der Saugvorrichtung an dem Laufstreifen, sodass die Funktionsseite des Grundkörpers den Laufstreifen zumindest abschnittsweise kontaktiert,
c) Ausbilden einer reversibel und zerstörungsfrei lösbaren Verbindung zwischen der Funktionsseite und dem Laufstreifen durch Beaufschlagen der Ansaugöffnungen mit einem Unterdruck mittels der Unterdruckerzeugungseinheit, und
d) Herauslösen des Laufstreifens aus der Vulkanisationsform durch Verfahren des Grundkörpers der Saugvorrichtung relativ zur Vulkanisationsform.

Das erfindungsgemäße Verfahren dient dem Herauslösen von zumindest teilweise vulkanisierten Laufstreifen aus einer Vulkanisationsform mit einer Saugvorrichtung. Nach Einschätzung der Erfinder ist es gerade die erfindungsgemäße Ausgestaltung des erfindungsgemäßen Verfahrens mit einer Saugvorrichtung, die es ermöglicht, dass der zumindest teilweise vulkanisierte Laufstreifen besonders schonend aus der Vulkanisationsform gelöst werden kann. Ohne an diese Theorie gebunden sein zu wollen, gehen die Erfinder davon aus, dass durch Anwendung des erfindungsgemäßen Verfahrens die zwischen Laufstreifen und Vulkanisationsform auftretenden Kräfte, insbesondere orthogonal zur Bahnrichtung des Laufstreifens, im Vergleich zum Stand der Technik erheblich reduziert werden können. Dies wird nach Einschätzung der Erfinder erreicht, indem das Herauslösen eben nicht in der Art eines Klebestreifens in Bahnrichtung des Laufstreifens erfolgt, sodass der vorvulkanisierte Laufstreifen stark gebogen wird und an der Abziehstelle zwischen Vulkanisationsform und Laufstreifen hohe Kräfte auftreten, sondern, dass das Herauslösen im erfindungsgemäßen Verfahren zumindest abschnittsweise, bevorzugt weitestgehend, parallel zu Flächennormalen des Laufstreifens erfolgt. Hierdurch können sowohl Beschädigungen am Laufstreifen, insbesondere Mikrorisse, als auch Beschädigungen von beispielsweise Lamellenstrukturen in der Vulkanisationsform, erfolgreich verringert werden.

Das erfindungsgemäße Verfahren bedient sich einer Saugvorrichtung. Die entsprechende Saugvorrichtung weist einen Grundkörper mit einer Funktionsseite sowie eine Unterdruckerzeugungseinheit auf. Der Fachmann versteht, dass es mit Blick auf eine möglichst leichte Integration des erfindungsgemäßen Verfahrens in bestehende Prozesse von Vorteil ist, wenn zumindest der Grundkörper der Saugvorrichtung so ausgelegt wird, dass er besonders leicht in bestehende Vulkanisationsvorrichtungen integriert werden kann. In einer bevorzugten Ausführung kann der Grundkörper beispielsweise als Presselement einer als Heizpresse ausgeführten Vulkanisationsvorrichtung ausgeführt werden, sodass das bestehende Presselement der Heizpresse derart modifiziert wird, dass es als Grundkörper für die Saugvorrichtung dienen kann. Diese Ausgestaltung erachten die Erfinder insbesondere auch mit Blick auf die Kosteneffizienz des erfindungsgemäßen Verfahrens als vorteilhaft. Bevorzugt ist daher ein erfindungsgemäßes Verfahren, wobei die Saugvorrichtung Bestandteil einer Vulkanisationsanlage ist, bevorzugt Bestandteil einer Heizpresse. Bevorzugt ist insoweit auch ein erfindungsgemäßes Verfahren, wobei der Grundkörper durch ein Presselement der Heizpresse gebildet wird.

Der Grundkörper der Saugvorrichtung weist auf seiner Funktionsseite die Vielzahl von Ansaugöffnungen auf, welche mit den Luftkanälen, die sich durch den Grundkörper hindurch erstrecken, verbunden sind. In anderen Worten handelt es sich in den meisten Fällen um ein erfindungsgemäßes Verfahren, wobei die Anzahl der Luftkanäle der Anzahl der Ansaugöffnungen entspricht. Die zu den einzelnen Ansaugöffnungen führenden Luftkanäle können dabei miteinander verbunden sein, so dass es möglich ist, dass die Vielzahl an Luftkanälen im Grundkörper gemeinsam ein Luftkanalnetzwerk ausbilden.

Da es im erfindungsgemäßen Verfahren der Grundkörper mit der Funktionsseite ist, mit Hilfe dessen der Laufstreifen aus der Vulkanisationsform herausgelöst wird, erachten es die Erfinder grundsätzlich als Vorteil, wenn die Funktionsseite des Grundkörpers in ihrer Größe, das heißt insbesondere in ihrer Breite und Länge, bezogen auf die Bahnrichtung des Laufstreifens, mit der Abmessung der Oberfläche des Laufstreifens korreliert. Hierdurch ist es vorteilhafterweise auch möglich, dass der Laufstreifen als Ganzes im Rahmen des erfindungsgemäßen Verfahrens im Wesentlichen gleichzeitig angehoben wird, sodass die zwischen Laufstreifen und Vulkanisationsform wirkenden Kräfte beim Herauslösen vorteilhafterweise reduziert werden können. Bevorzugt ist ein erfindungsgemäßes Verfahren, wobei die Größe der Funktionsseite des Grundkörpers mit der Größe des Laufstreifens korreliert, und/oder wobei die Größe der Funktionsseite des Grundkörpers mit der Größe der Vulkanisationsform korreliert.

Der Fachmann wird die Anzahl an Ansaugöffnungen, das heißt auch die Anzahl an Luftkanälen, in der Praxis für die gegebenen Anforderungen passend einstellen. Dem Fachmann ist klar, dass die absolute Anzahl an Ansaugöffnungen an der Funktionsseite des Grundkörpers dabei grundsätzlich sowohl vom im Verfahren wirkenden Unterdruck als auch vom Gewicht des Laufstreifens abhängen wird. Die Erfinder haben allerdings insoweit vorteilhafte Bereiche für die Anzahl an Ansaugöffnungen bzw. Luftkanälen identifiziert, welche eine zuverlässige Verbindung und dadurch ein effizientes und schonendes Herauslösen von Laufstreifen aus Vulkanisationsformen ermöglichen. Bevorzugt ist nämlich ein erfindungsgemäßes Verfahren, wobei die Funktionsseite 100 oder mehr, bevorzugt 200 oder mehr, besonders bevorzugt 300 oder mehr, ganz besonders bevorzugt 350 oder mehr, Ansaugöffnungen umfasst, und/oder wobei die Funktionsseite 100 bis 1000, bevorzugt 150 bis 500, besonders bevorzugt 200 bis 400, Ansaugöffnungen umfasst. Bevorzugt ist zusätzlich oder alternativ ein erfindungsgemäßes Verfahren, wobei sich 100 oder mehr, bevorzugt 200 oder mehr, besonders bevorzugt 300 oder mehr, ganz besonders bevorzugt 350 oder mehr, Luftkanäle durch den Grundkörper erstrecken, und/oder wobei sich 100 bis 1000, bevorzugt 150 bis 500, besonders bevorzugt 200 bis 400, Luftkanäle durch den Grundkörper erstrecken. Bevorzugt ist zusätzlich oder alternativ ein erfindungsgemäßes Verfahren, wobei die Funktionsseite pro Quadratmeter 30 oder mehr, bevorzugt 70 oder mehr, besonders bevorzugt 100 oder mehr, Ansaugöffnungen umfasst, und/oder wobei die Funktionsseite pro Quadratmeter 30 bis 300, bevorzugt 70 bis 200, besonders bevorzugt 100 bis 150, Ansaugöffnungen umfasst.

Grundsätzlich erachten es die Erfinder als vorteilhaft, wenn die Ansaugöffnungen bzw. Luftkanäle möglichst gleichmäßig über die Funktionsseite bzw. den Grundkörper verteilt sind. Hierdurch kann der Laufstreifen vorteilhafterweise besonders gleichmäßig aus der Vulkanisationsform gelöst werden, da die punktuell wirkenden Kräfte reduziert werden und besser auf den Laufstreifen verteilt werden können, sodass ungewollte Mikrorisse vorteilhafterweise vermieden werden können. Bevorzugt ist daher ein erfindungsgemäßes Verfahren, wobei die Ansaugöffnungen äquidistant zueinander an der Funktionsseite angeordnet sind, und/oder wobei die Ansaugöffnungen in einem gleichmäßigen Muster, bevorzugt in einem Raster, an der Funktionsseite angeordnet sind, besonders bevorzugt in Reihen quer zur Bahnrichtung des von der Funktionsseite kontaktierten Laufstreifens. Bevorzugt ist insoweit zusätzlich oder alternativ auch ein erfindungsgemäßes Verfahren, wobei die Reihen jeweils 4 oder mehr, bevorzugt 6 oder mehr, Ansaugöffnungen aufweisen. Bevorzugt ist wiederum zusätzlich oder alternativ ein erfindungsgemäßes Verfahren, wobei die Luftkanäle äquidistant zueinander im Grundkörper verteilt sind, und/oder wobei die Luftkanäle in einem in einem gleichmäßigen Muster, bevorzugt in einem Raster, im Grundkörper angeordnet sind, besonders bevorzugt in Reihen quer zur Bahnrichtung des von der Funktionsseite kontaktierten Laufstreifens.

Vorteilhafterweise ist das erfindungsgemäße Verfahren hinsichtlich der geometrischen Ausgestaltung der Ansaugöffnungen sowie der Luftkanäle relativ frei. Insoweit haben die Erfinder allerdings Ausführungsformen identifiziert, welche eine besonders gute Ansaugwirkung zeigen, sodass ein gleichmäßiges Ansaugen des Laufstreifens erreicht werden kann und insoweit ein besonders schonendes Herauslösen ermöglicht wird. Bevorzugt ist nämlich ein erfindungsgemäßes Verfahren, wobei die Ansaugöffnungen und/oder die Luftkanäle, bevorzugt die Ansaugöffnungen und die Luftkanäle, einen runden, ovalen oder eckigen, bevorzugt runden, Querschnitt aufweisen. Bevorzugt ist zusätzlich oder alternativ ein erfindungsgemäßes Verfahren, wobei die Ansaugöffnungen und die Luftkanäle im Wesentlichen den gleichen Querschnitt aufweisen. Bevorzugt ist zusätzlich oder alternativ zudem ein erfindungsgemäßes Verfahren, wobei die Ansaugöffnungen und/oder die Luftkanäle, bevorzugt die Ansaugöffnungen und die Luftkanäle, jeweils gleichartig ausgeführt sind.

Bevorzugt ist zusätzlich oder alternativ ein erfindungsgemäßes Verfahren, wobei die Ansaugöffnungen und/oder die Luftkanäle, bevorzugt die Ansaugöffnungen und die Luftkanäle, einen Durchmesser im Bereich von 2 mm bis 20 mm, bevorzugt im Bereich von 4 mm bis 18 mm, besonders bevorzugt im Bereich von 6 mm bis 16 mm, aufweisen.

Mit Blick auf die Energieeffizienz des erfindungsgemäßen Verfahrens, insbesondere hinsichtlich der für die Druckerzeugungseinheit benötigten Energie, ist es bevorzugt, die Anzahl von Ansaugöffnungen in der Funktionsseite des Grundkörpers nicht übermäßig zu erhöhen. Jeder zusätzliche Luftkanal bzw. jede mit einem Luftkanal verbundene Ansaugöffnung erhöht die von der Druckerzeugungseinheit benötigte Energiemenge, um einen Unterdruck, insbesondere einen vordefinierten Unterdruck, an der entsprechenden Ansaugöffnung auszubilden. Insoweit haben die Erfinder gefunden, dass die zwischen Laufstreifen und Vulkanisationsform auftretenden Kräfte beim Herauslösen, insbesondere Kräfte orthogonal zur Flächennormalen des Laufstreifens, ab einer bestimmten Distanz zwischen nebeneinander liegenden Ansaugöffnungen, nicht bzw. kaum noch weiter reduziert werden können. Dementsprechend ist es mit Blick auf die Verfahrensökonomie vorteilhaft, die Ansaugöffnungen nicht zu nah nebeneinander zu platzieren. Bevorzugt ist also ein erfindungsgemäßes Verfahren, wobei die Mittelpunkte von nebeneinander angeordneten Ansaugöffnungen und/oder Luftkanälen zueinander einen Abstand von 25 mm oder mehr, bevorzugt 40 mm oder mehr, besonders bevorzugt 60 mm oder mehr, aufweisen, und/oder wobei die Mittelpunkte von nebeneinander angeordneten Ansaugöffnungen und/oder Luftkanälen zueinander einen Abstand im Bereich von 25 mm bis 500 mm, bevorzugt im Bereich von 30 mm bis 400 mm, besonders bevorzugt im Bereich von 35 mm bis 300 mm, aufweisen.

Ein wesentlicher Aspekt der Erfindung ist, dass in Verfahrensschritt c) eine reversibel und zerstörungsfrei lösbaren Verbindung zwischen der Funktionsseite und dem Laufstreifen ausgebildet wird. Durch diese reversibel und zerstörungsfrei lösbare Verbindung kann der Laufstreifen von der Saugvorrichtung aufgenommen und aus der Vulkanisationsform herausgelöst werden. Die erforderliche reversibel und zerstörungsfrei lösbare Verbindung wird durch das Anlegen eines Unterdrucks erzeugt, wobei eine solche reversibel und zerstörungsfrei lösbaren Verbindung nach dem Herauslösen des Laufstreifens aus der Vulkanisationsform anschließend leicht wieder aufgelöst werden kann, ohne dass der Laufstreifen eine starke mechanische Belastung erfährt. Für die Erzeugung des Unterdrucks wird die Unterdruckerzeugungseinheit verwendet. Derartige und für das erfindungsgemäße Verfahren geeignete Unterdruckerzeugungseinheiten findet der Fachmann im Stand der Technik, wo diese von zahlreichen Anbietern kommerziell erhältlich sind, insbesondere wird es sich in den meisten Fällen um eine Vakuumpumpe handeln. Für die meisten Fälle relevant ist demgemäß ein erfindungsgemäßes Verfahren, wobei die Unterdruckerzeugungseinheit eine Vakuumpumpe ist.

Das erfindungsgemäße Verfahren betrifft das Herauslösen von Laufstreifen aus Vulkanisationsformen. Dem Fachmann ist klar, dass die Herstellung ganzer Fahrzeugreifen, das heißt insbesondere runder Fahrzeugreifen umfassend mehrere Lagen, welche neben unterschiedlichen Kautschukmischungen auch noch weitere Elemente, wie beispielsweise Festigkeitsträger, aufweisen können, mit der hier relevanten Vulkanisationsform nicht sinnvoll möglich ist. Die Vulkanisationsform ist insoweit nicht für die Ausformung ganzer Fahrzeugreifen geeignet. In den meisten Fällen sind entsprechende Vulkanisationsformen beim Herauslösen des Laufstreifens in einer Vulkanisationsvorrichtung, insbesondere einer Heizpresse, angeordnet. Bevorzugt ist in anderen Worten ein erfindungsgemäßes Verfahren, wobei die Vulkanisationsform für die Vulkanisation von Laufstreifen für Fahrzeugreifen geeignet und bestimmt ist, bevorzugt für die Vulkanisation von Laufstreifen für den Einsatz in der kalten Runderneuerung von Fahrzeugreifen. Bevorzugt ist zusätzlich oder alternativ ein erfindungsgemäßes Verfahren, wobei die Vulkanisationsform in einer Vulkanisationsvorrichtung angeordnet ist, bevorzugt in einer Heizpresse.

Wie vorstehend erläutert, sind dem Fachmann Vulkanisationsformen für Laufstreifen, insbesondere im Bereich der kalten Runderneuerung von Fahrzeugreifen, umfassend bekannt. Bei entsprechenden Vulkanisationsformen handelt es sich, bezogen auf die Bahnrichtung des damit herstellbaren Laufstreifens, regelmäßig um flache Vulkanisationsformen. Die Bezeichnung "flach" für die Vulkanisationsform bedeutet im Rahmen der vorliegenden Erfindung, dass die Vulkanisationsform sich weitgehend entlang einer Ebene erstreckt, in anderen Worten also - anders als beispielsweise Vulkanisationsformen bei der Neureifenherstellung - kaum oder gar nicht gekrümmt ist, sodass die Vulkanisation eines Laufstreifenrohlings umfassend eine vulkanisierbare Kautschukmischung mittels der Vulkanisationsform in einem ebenen Erzeugnis resultieren wird, welches entsprechend ebenfalls kaum oder gar nicht gekrümmt sein wird. Die geringe Krümmung wird dabei in Bahnrichtung des späteren zumindest teilweise vulkanisierten Laufstreifens bewertet, so dass quer zum zumindest teilweise vulkanisierten Laufstreifen eine übliche Krümmung vorliegen kann. Entsprechende Vulkanisationsformen sind häufig aus mehreren Vulkanisationsformsegmenten zusammengesetzt, sodass die Länge des damit herzustellenden Laufstreifens variabel einstellbar ist. Bevorzugt ist entsprechend ein erfindungsgemäßes Verfahren, wobei die Vulkanisationsform bezogen auf die Bahnrichtung des damit herstellbaren Laufstreifens im Wesentlichen keine Krümmung aufweist, und/oder wobei die Vulkanisationsform eine flache Vulkanisationsform ist. Bevorzugt ist zusätzlich oder alternativ ein erfindungsgemäßes Verfahren, wobei die Vulkanisationsform mehrere miteinander reversibel und zerstörungsfrei lösbar verbundene Laufstreifenformsegmente umfasst; bevorzugt gleichartige Laufstreifenformsegmente. Besonders bevorzugt ist insoweit ebenfalls ein erfindungsgemäßes Verfahren, wobei die Vulkanisationsform 3 bis 80, bevorzugt 10 bis 70, besonders bevorzugt 20 bis 60, ganz besonders bevorzugt 30 bis 50, Laufstreifenformsegmente umfasst, welche insbesondere bevorzugt auf Stoß angeordnet sind.

Die Erfinder haben insoweit weitere vorteilhafte Ausführungsformen für die Vulkanisationsform identifiziert, mit denen sich das ansaugbasierte Herauslösen gut realisieren lässt. Bevorzugt ist nämlich ein erfindungsgemäßes Verfahren, wobei die Vulkanisationsform eine Länge im Bereich von 1 m bis 12 m, bevorzugt im Bereich von 2 m bis 11 m, besonders bevorzugt im Bereich von 3 m bis 10 m, aufweist. Bevorzugt ist zusätzlich oder alternativ ein erfindungsgemäßes Verfahren, wobei die Vulkanisationsform Stahl oder Aluminium umfasst oder daraus besteht, bevorzugt daraus besteht.

In Übereinstimmung mit dem fachmännischen Verständnis wird das Laufstreifenprofil des mittels der Vulkanisationsform vulkanisierten Laufstreifens durch am Boden der Vulkanisationsform angeordneten Strukturierungen geprägt, welche das Laufstreifenprofil ausbilden. Die Vulkanisationsform kann also als Negativ eines hiermit hergestellten, zumindest teilweise vulkanisierten Laufstreifens betrachtet werden und korreliert insoweit hinsichtlich seiner Dimensionen mit dem hergestellten Laufstreifen. Bevorzugt ist zusätzlich oder alternativ ein erfindungsgemäßes Verfahren, wobei der zumindest teilweise vulkanisierte Laufstreifen auf der der Funktionsseite der Saugvorrichtung abgewandten Seite ein Reifenprofil aufweist, und/oder wobei der zumindest teilweise vulkanisierte Laufstreifen auf der der Vulkanisationsform zugewandten Seite ein Reifenprofil aufweist.

Bevorzugt ist hinsichtlich der Abmessungen des Laufstreifens grundsätzlich ein erfindungsgemäßes Verfahren, wobei der zumindest teilweise vulkanisierte Laufstreifen eine Breite im Bereich von 100 mm bis 500 mm, bevorzugt im Bereich von 150 mm bis 450 mm, besonders bevorzugt im Bereich von 180 mm bis 400 mm, aufweist, wobei die Breite des Laufstreifens seine Ausdehnung in axialer Richtung eines mit dem Laufstreifen belegten Fahrzeugreifens ist. Bevorzugt ist zusätzlich oder alternativ ein erfindungsgemäßes Verfahren, wobei der zumindest teilweise vulkanisierte Laufstreifen eine Dicke im Bereich von 5 mm bis 40 mm, bevorzugt im Bereich von 10 mm bis 30 mm, aufweist, wobei die Dicke des Laufstreifens seine Ausdehnung in radialer Richtung eines mit dem Laufstreifen belegten Fahrzeugreifens ist. Bevorzugt ist zusätzlich oder alternativ ein erfindungsgemäßes Verfahren, wobei der zumindest teilweise vulkanisierter Laufstreifen eine Länge im Bereich von 1 m bis 12 m, bevorzugt im Bereich von 2 m bis 11 m, besonders bevorzugt im Bereich von 3 m bis 10 m, aufweist, wobei die Länge des Laufstreifens seine Ausdehnung in Umfangsrichtung eines mit dem Laufstreifen belegten Fahrzeugreifens ist.

Mit Blick auf eine besonders effiziente Verfahrensführung ist es für die meisten Fälle vorteilhaft, wenn der Laufstreifen im Rahmen des erfindungsgemäßen Verfahrens zuvor vollständig vulkanisiert wird, sodass im Nachgang an das erfindungsgemäße Verfahren, eine Applikation auf einen entsprechend vorbereiteten Altreifen erfolgen kann. Bevorzugt ist also ein erfindungsgemäßes Verfahren, wobei der vulkanisierte Laufstreifen im Wesentlichen vollständig vulkanisiert ist.

In besonders vorteilhaften Ausführungsformen des erfindungsgemäßen Verfahrens erfolgt das Herauslösen des Laufstreifens aus der Vulkanisationsform unmittelbar im Anschluss an die Vulkanisation, das heißt die Herstellung des zumindest teilweise vulkanisierten Laufstreifens. In anderen Worten handelt es sich bevorzugt um ein erfindungsgemäßes Verfahren, wobei das Herstellen des zumindest teilweise vulkanisierten Laufstreifens in Verfahrensschritt a) erfolgt durch Vulkanisation eines Laufstreifenrohlings, bevorzugt in einer Heizpresse, besonders bevorzugt in einer Heizpresse mit zwei oder mehr Etagen. Hierdurch erfolgt die Vulkanisation vorteilhafterweise auch besonders effizient.

Das Konzept der Vulkanisation ist dem Fachmann im Bereich der Technik umfassend vertraut und bezeichnet insbesondere den Prozess, in dem vulkanisierbare Kautschukmischungen durch Vernetzung in Gummiwerkstoffe überführt werden, Relevant ist in diesem Fall also insbesondere ein erfindungsgemäßes Verfahren, wobei der Laufstreifenrohling eine vulkanisierbare Kautschukmischung umfasst oder daraus besteht, bevorzugt daraus besteht, wobei die vulkanisierbare Kautschukmischung zumindest einen Dienkautschuk und zumindest einen Füllstoff umfasst, wobei der Dienkautschuk bevorzugt ausgewählt ist aus der Gruppe bestehend aus StyrolButadien-Kautschuk, synthetischem Polyisopren, natürlichem Polyisopren, Butadienkautschuk und Mischungen dieser Kautschuke.

In Verfahrensschritt b) des erfindungsgemäßen Verfahrens wird die Saugvorrichtung derart an dem Laufstreifen angeordnet, dass die Funktionsseite des Grundkörpers den Laufstreifen zumindest abschnittsweise kontaktiert. In besonders vorteilhaften Ausführungsformen kann dieser Verfahrensschritt mit einer automatisierten Bewegungseinrichtung erfolgen, wobei dies nach Einschätzung der Erfinder eine besonders effiziente Verfahrensführung und einen vorteilhaft hohen Automatisierungsgrad ermöglicht. Bevorzugt ist demgemäß ein erfindungsgemäßes Verfahren, wobei das Anordnen in Verfahrensschritt b) mit einer automatisierten Bewegungseinrichtung erfolgt.

Nach Einschätzung der Erfinder ist es als wichtiger Vorteil der vorliegenden Erfindung zu sehen, dass das erfindungsgemäße Verfahren eine besonders schonende Verfahrensführung ermöglicht, sodass Beschädigungen am Laufstreifen und an der Vulkanisationsform im Vergleich zum Stand der Technik vorteilhafterweise reduziert werden können. Insoweit erachten es die Erfinder als vorteilhaft, wenn das derzeit aus dem Stand der Technik bekannte Abziehen des Laufstreifens aus der Vulkanisationsform gegen die Längsrichtung im erfindungsgemäßen Verfahren weitgehend vermieden wird. Dies kann insbesondere dadurch erreicht werden, dass die Anordnung der Funktionsseite am Laufstreifen in Verfahrensschritt b) so erfolgt, dass der Laufstreifen überwiegend, bevorzugt über seine gesamte Länge in Bahnrichtung, von der Funktionsseite kontaktiert wird, wobei insbesondere bevorzugt die weit überwiegende Mehrheit, besonders bevorzugt sämtliche, der Ansaugöffnungen im Kontaktbereich zwischen Funktionsseite und Laufstreifen angeordnet sind. Hierdurch kann auf ein Abziehen des Laufstreifens gegen die Längsrichtung wie es aus dem Stand der Technik bekannt ist, vorteilhafterweise verzichtet werden. Vielmehr kann der Laufstreifen in diesem Fall über weite Teile der Länge im Wesentlichen gleichzeitig herausgelöst werden, sodass Mikrorisse im Laufstreifen, beziehungsweise im herauszulösenden Laufstreifen, und Beschädigungen an der Vulkanisationsform erfolgreich vermieden werden können. Dies gilt insbesondere auch für stark strukturierte Vulkanisationsformen, welche vom Fachmann zuweilen auch als "highly siped" bezeichnet werden, das heißt Vulkanisationsformen mit kleinen Strukturelementen, beispielsweise zur Ausformung von Lamellen, welche Rillen mit einer Breite von 2 mm oder weniger im Laufstreifen ausformen. Derartige Strukturelemente zur Ausformung von Lamellen, wie sie beispielsweise bei Winterreifen häufig zum Einsatz kommen, sind nach Einschätzung der Erfinder besonders häufig von Verformungen betroffen, welche aus dem im Stand der Technik durchgeführten Abziehen des Laufstreifens in Bahnrichtung resultieren. Bevorzugt ist entsprechend ein erfindungsgemäßes Verfahren, wobei in Verfahrensschritt b) die Funktionsseite den Laufstreifen über 80 % oder mehr, bevorzugt 90 % oder mehr, besonders bevorzugt 95 % oder mehr, ganz besonders bevorzugt im Wesentlichen über 100 % kontaktiert, bezogen auf die Länge des Laufstreifens in Bahnrichtung.

Es ist als Vorteil des erfindungsgemäßen Verfahrens zu sehen, dass der in Verfahrensschritt c) angelegte Unterdruck an den Ansaugöffnungen vom Fachmann exakt auf die jeweiligen Anforderungen eingestellt werden kann. Für den Fall von beispielsweise besonders schweren Laufstreifen wird der Fachmann den Unterdruck entsprechend im Vergleich zu leichteren Laufstreifen erhöhen. In der Praxis lässt sich der im konkreten Anwendungsfall einzustellende Unterdruck für den Fachmann demnach leicht ermitteln. Die Erfinder haben insoweit geeignete Bereiche definiert, welche in den meisten typischen Anwendungsfällen ein im erfindungsgemäßen Verfahren gewünschtes schonendes Herauslösen des Laufstreifens aus der Vulkanisationsform ermöglichen werden. Bevorzugt ist nämlich ein erfindungsgemäßes Verfahren, wobei der Unterdruck 10 kPa oder weniger, bevorzugt 1 kPa oder weniger, besonders bevorzugt 1 Pa oder weniger, beträgt, und/oder wobei der Unterdruck im Bereich von 1 µPa bis 10 kPa, bevorzugt im Bereich von 100 mPa bis 5 kPa, besonders bevorzugt im Bereich von 100 Pa bis 1 kPa, liegt. Bevorzugt ist zusätzlich oder alternativ ein erfindungsgemäßes Verfahren, wobei der Unterdruck ausgewählt ist aus der Gruppe bestehend aus Feinvakuum und Hochvakuum.

Wie vorstehend erläutert, ist es als wichtiger Vorteil der vorliegenden Erfindung zu sehen, dass ein Herauslösen des Laufstreifens aus der Vulkanisationsform besonders schonend ermöglicht wird, sodass Beschädigungen am Laufstreifen und/oder der Vulkanisationsform weitgehend minimiert werden können. Insoweit erachten es die Erfinder als vorteilhaft, wenn das Verfahren des Grundkörpers der Saugvorrichtung in Verfahrensschritt d) möglichst weitgehend entlang der Flächennormalen des Laufstreifens erfolgt, so dass der Laufstreifen möglichst senkrecht aus der Vulkanisationsform herausgelöst wird. Hierdurch werden vorteilhafterweise die am Laufstreifen und der Vulkanisationsform angreifenden Kräfte beim Herauslösen des Laufstreifens optimal und gleichmäßig verteilt, sodass Beschädigungen am Laufstreifen und der Vulkanisationsform stark reduziert werden können. Nach Einschätzung der Erfinder zeigt sich dieser Effekt insbesondere an vergleichsweise kleinen Strukturelementen in der Vulkanisationsform, beispielsweise Strukturelementen zur Ausformung von Lamellen im Laufstreifenprofil. Derartige Strukturelemente, welche häufig eine mittlere Breite von 2 mm oder weniger aufweisen können, werden durch das im Stand der Technik offenbarte klebebandartige Abziehen des Laufstreifens häufig verbogen, sodass eine Ausformung von Strukturelementen der entsprechenden Laufstreifen häufig nicht oder nur noch schwer möglich ist. Bevorzugt ist entsprechend ein erfindungsgemäßes Verfahren, wobei das Verfahren des Grundkörpers relativ zur Vulkanisationsform in Verfahrensschritt d) entlang einer Bewegungsrichtung B_{R} erfolgt, wobei die Bewegungsrichtung B_{R} mit der Flächennormalen des Laufstreifens übereinstimmt oder wobei die Bewegungsrichtung B_{R} mit der Flächennormalen des Laufstreifens einen kleinsten Schnittwinkel von 20° oder weniger, bevorzugt von 10° oder weniger, besonders bevorzugt von 5° oder weniger, ganz besonders bevorzugt von 2° oder weniger, einschließt.

Zur Vermeidung von Beschädigungen erachten es die Erfinder entsprechend als besonders vorteilhaft, wenn der Laufstreifen in Verfahrensschritt d), bezogen auf seine Länge in Bahnrichtung, im Wesentlichen gleichzeitig aus der Vulkanisationsform gelöst wird. Hierdurch werden ebenfalls die auf den Laufstreifen und die Vulkanisationsform wirkenden Kräfte gleichmäßig über deren Länge in Bahnrichtung verteilt. Bevorzugt ist ein erfindungsgemäßes Verfahren, wobei das Herauslösen des Laufstreifens aus der Vulkanisationsform in Verfahrensschritt d) für 50 % oder mehr, bevorzugt 70 % oder mehr, besonders bevorzugt 90 % oder mehr des Laufstreifens, bezogen auf die Länge des Laufstreifens in Bahnrichtung, im Wesentlichen gleichzeitig erfolgt.

Vorteilhafterweise können dem erfindungsgemäßen Verfahren weitere Verfahren vorbeziehungsweise nachgelagert sein, wie beispielsweise die Vulkanisation des zumindest teilweise vulkanisierten Laufstreifens oder die Weiterverarbeitung des herausgelösten Laufstreifens. Bevorzugt ist für die Praxis ein erfindungsgemäßes Verfahren, wobei das Verfahren zusätzlich den Verfahrensschritt umfasst:
e) Ablegen des herausgelösten Laufstreifens auf einer Ablagefläche.

Bevorzugt ist zusätzlich oder alternativ ein erfindungsgemäßes Verfahren, wobei das Verfahren zusätzlich den Verfahrensschritt umfasst:
f) Auflösen der reversibel und zerstörungsfrei lösbaren Verbindung zwischen der Funktionsseite und dem herausgelösten Laufstreifen durch Aufheben des Unterdrucks.

Die Erfindung betrifft zudem eine Vulkanisationsanlage für Laufstreifen für den Einsatz in der kalten Runderneuerung von Fahrzeugreifen, insbesondere für den Einsatz in einem erfindungsgemäßen Verfahren, umfassend:
X) eine Vulkanisationsvorrichtung mit einer Vulkanisationsform zum Vulkanisieren von Laufstreifen, und
Y) eine Saugvorrichtung, wobei die Saugvorrichtung umfasst:
   i) einen Grundkörper mit einer Funktionsseite, die eine Vielzahl von Ansaugöffnungen aufweist, wobei der Grundkörper eine Vielzahl an Luftkanälen aufweist, welche sich durch den Grundkörper erstrecken und jeweils mit zumindest einer der Ansaugöffnungen verbunden sind, und
   ii) eine fluidleitend mit den Luftkanälen verbundene Unterdruckerzeugungseinheit zur Erzeugung eines Unterdrucks,
wobei die Unterdruckerzeugungseinheit dazu eingerichtet ist, die Ansaugöffnungen mit einem Unterdruck zu beaufschlagen, sodass zwischen der Funktionsseite und einem, die Funktionsseite kontaktierenden, in der Vulkanisationsform angeordneten, Laufstreifen eine reversibel und zerstörungsfrei lösbare Verbindung ausgebildet werden kann.

Eine entsprechende erfindungsgemäße Vulkanisationsanlage ermöglicht es in vorteilhafter Weise, die für das erfindungsgemäße Verfahren benötigte Saugvorrichtung zumindest teilweise in die Vulkanisationsvorrichtung zu integrieren, sodass der Grundkörper der Saugvorrichtung beispielsweise auch als das Presselement der Vulkanisationsvorrichtung dienen kann. Diese Ausgestaltung ist nach Einschätzung der Erfinder besonders vorteilhaft, da hierbei für die Durchführung des erfindungsgemäßen Verfahrens mit einer erfindungsgemäßen Vulkanisationsanlage, bestehende Vulkanisationsvorrichtungen nur leicht modifiziert werden müssen, beispielsweise durch Austausch des Presselements und/oder durch Modifizieren des Presselements zum Erhalten eines erfindungsgemäßen Grundkörpers. Zudem kann durch die Integration der Saugvorrichtung in die Press- und/oder Heizelemente der Vulkanisationsvorrichtung eine besonders platzsparende Vulkanisationsanlage erhalten werden, bei der in vorteilhafter Weise für das nachgelagerte Herauslösen der zumindest teilweise vulkanisierten Laufstreifen die ohnehin vorhandenen Press- und/oder Heizelemente sowie deren Bewegungsmechanismen zurückgegriffen werden kann.

Offenbart wird überdies eine Verwendung einer Saugvorrichtung, bevorzugt einer Saugvorrichtung einer erfindungsgemäßen Vulkanisationsanlage, beim Herauslösen von Laufstreifen zur Vermeidung von Beschädigungen an Vulkanisationsformen und an mit den Vulkanisationsformen hergestellten Laufstreifen, insbesondere zur Vermeidung von Lamellenbeschädigungen an Vulkanisationsformen und zur Vermeidung von ungewollten Rissen an mit den Vulkanisationsformen hergestellten Laufstreifen.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine schematische Darstellung der Verfahrensschritte eines erfindungsgemäßen Verfahrens in einer bevorzugten Ausführungsform; und
- Fig. 2: eine schematische Darstellung einer erfindungsgemäßen Vulkanisationsanlage in einer bevorzugten Ausführungsform.

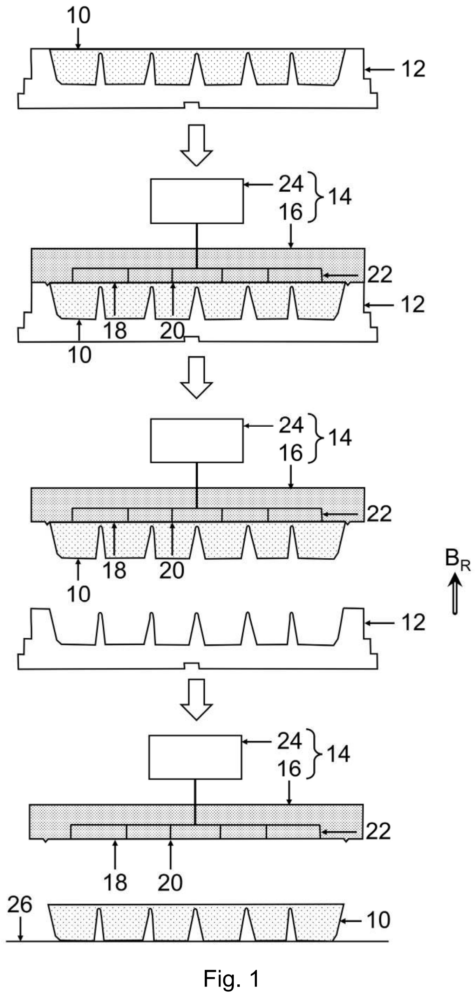

Fig. 1 zeigt das erfindungsgemäße Verfahren zum Herauslösen von zumindest teilweise vulkanisierten Laufstreifen 10 aus einer Vulkanisationsform 12 in einer bevorzugten Ausführungsform zu verschiedenen Zeitpunkten. Das Verfahren ist in dem gezeigten Beispiel der Fig. 1 schematisch dargestellt, wobei die Verfahrensschritte durch Richtungspfeile voneinander getrennt sind.

Im gezeigten Beispiel der Fig. 1 wird in einem ersten Schritt der zumindest teilweise vulkanisierte Laufstreifen 10 in der Vulkanisationsform 12 hergestellt, nämlich durch Vulkanisieren einer vulkanisierbaren Kautschukmischung. Der resultierende Laufstreifen 10 umfasst eine Vielzahl von Strukturelementen, welche durch die Vulkanisationsform 12 ausgeformt werden.

In einem zweiten Verfahrensschritt wird eine Saugvorrichtung 14 an dem Laufstreifen 12 angeordnet, wobei die Saugvorrichtung 14 einen Grundkörper 16 sowie eine Unterdruckerzeugungseinheit 24 umfasst. Im gezeigten Beispiel der Fig. 1 erstreckt sich der Grundkörper 16 der Saugvorrichtung 14 über die gesamte Breite des dargestellten Laufstreifens 10. Überdies erstreckt er sich über die gesamte Ausdehnung des Laufstreifens 10 in Bahnrichtung, wobei dies in der Querschnittsansicht der Fig. 1 nicht dargestellt ist.

Der gezeigte Grundkörper 16 umfasst eine Funktionsseite 18, welche eine Vielzahl an Ansaugöffnungen 20 aufweist. Überdies umfasst der Grundkörper 16 mehrere Luftkanäle 22, welche sich als Netzwerk durch den Grundkörper 16 erstrecken und mit den Ansaugöffnungen 20 verbunden sind. Die daraus resultierende fluidleitende Verbindung zwischen den Ansaugöffnungen 20 über die Luftkanäle 22 mit der Unterdruckerzeugungseinheit 24 ist ebenfalls in Fig. 1 dargestellt. Das Anordnen im zweiten Schritt erfolgt nun derart, dass die mit Ansaugöffnungen 20 belegte Funktionsseite 18 vollflächig auf dem Laufstreifen 10 aufliegt. Ausgehend von dieser Anordnung wird eine reversibel und zerstörungsfrei lösbare Verbindung zwischen der Funktionsseite 18 und dem Laufstreifen 10 erreicht, indem die Ansaugöffnung 20 mit einem Unterdruck beaufschlagt werden, der auf das Gewicht des Laufstreifens abgestimmt wird.

Anschließend erfolgt im nächsten Schritt das Herauslösen des Laufstreifens 10 aus der Vulkanisationsform 12 durch das Verfahren des Grundkörpers 16 der Saugvorrichtung 14 in Bewegungsrichtung B_{R} relativ zur Vulkanisationsform 12, wobei die Bewegung entlang der Flächennormalen des Laufstreifens 10 erfolgt.

Im letzten dargestellten Schritt des in Fig. 1 gezeigten Beispiels wird der vom Grundkörper 16 aufgenommene Laufstreifen 10 auf einer Ablagefläche 26 zur Weiterverarbeitung abgelegt und die reversibel und zerstörungsfrei lösbare Verbindung gelöst.

In dem Beispiel der Fig. 1 entspricht die Anzahl der Ansaugöffnungen 20 dabei der Anzahl der Luftkanäle 22, wobei die Ansaugöffnungen 20 äquidistant zueinander an der Funktionsseite 18 angeordnet sind, sodass orthogonal zur Bahnrichtung des Laufstreifens 10 sechs Reihen entstehen. Im gezeigten Beispiel umfasst die Funktionsseite 18 dabei insgesamt 350 Ansaugöffnungen 20 und entsprechend auch 350 Luftkanäle 22, welche jeweils gleichartig ausgeführt sind und einen Durchmesser von 10 mm aufweisen. Bei der gezeigten Unterdruckerzeugungseinheit 24 handelt es sich in Fig. 1 um eine Vakuumpumpe.

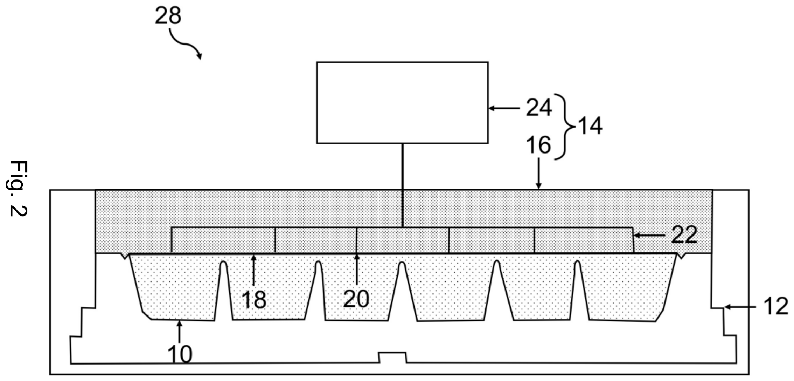

In Fig. 2 ist schematisch eine erfindungsgemäße Vulkanisationsanlage 28 gezeigt, welche eine Vulkanisationsvorrichtung sowie eine Saugvorrichtung 14 umfasst. Im gezeigten Beispiel ist der Grundkörper 16 der Saugvorrichtung 14 in das Presselement der Vulkanisationsvorrichtung integriert, sodass vorteilhafterweise auch kein weiterer apparativer Aufwand notwendig ist.

Durch das erfindungsgemäße Verfahren und die erfindungsgemäße Vulkanisationsanlage 28 können Laufstreifen 10 besonders schonend aus Vulkanisationsformen 12 entnommen werden, wobei Beschädigungen, sowohl am Laufstreifen 10 als auch an der Vulkanisationsform 12, im Vergleich zum Stand der Technik stark reduziert werden können, sodass der Lebenszyklus der Vulkanisationsform 12 erheblich verlängert werden kann und der Ausschuss an beschädigten Laufstreifen 10 erheblich reduziert werden kann.

### Bezugszeichenliste

- 10: Laufstreifen
- 12: Vulkanisationsform
- 14: Saugvorrichtung
- 16: Grundkörper
- 18: Funktionsseite
- 20: Ansaugöffnung
- 22: Luftkanal
- 24: Unterdruckerzeugungseinheit
- 26: Ablagefläche
- 28: Vulkanisationsanlage

- B_{R}: Bewegungsrichtung

## Patentansprüche

1. Verfahren zum Herauslösen von zumindest teilweise vulkanisierten Laufstreifen (10) aus einer Vulkanisationsform (12) mit einer Saugvorrichtung (14), wobei die Saugvorrichtung (14) umfasst:
i) einen Grundkörper (16) mit einer Funktionsseite (18), die eine Vielzahl von Ansaugöffnungen (20) aufweist, wobei der Grundkörper (16) eine Vielzahl an Luftkanälen (22) aufweist, welche sich durch den Grundkörper (16) erstrecken und jeweils mit zumindest einer der Ansaugöffnungen (20) verbunden sind, und
ii) eine fluidleitend mit den Luftkanälen (22) verbundene Unterdruckerzeugungseinheit (24) zur Erzeugung eines Unterdrucks an den Ansaugöffnungen (20),
umfassend die Verfahrensschritte:
a) Bereitstellen oder Herstellen eines zumindest teilweise vulkanisierten Laufstreifens (10) in einer Vulkanisationsform (12),
b) Anordnen der Saugvorrichtung (14) an dem Laufstreifen (10), sodass die Funktionsseite (18) des Grundkörpers (16) den Laufstreifen (10) zumindest abschnittsweise kontaktiert,
c) Ausbilden einer reversibel und zerstörungsfrei lösbaren Verbindung zwischen der Funktionsseite (18) und dem Laufstreifen (10) durch Beaufschlagen der Ansaugöffnungen (20) mit einem Unterdruck mittels der Unterdruckerzeugungseinheit (24), und
d) Herauslösen des Laufstreifens (10) aus der Vulkanisationsform (12) durch Verfahren des Grundkörpers (16) der Saugvorrichtung (14) relativ zur Vulkanisationsform (12).

2. Verfahren nach Anspruch 1, wobei die Funktionsseite (18) 100 oder mehr Ansaugöffnungen (20) umfasst.

3. Verfahren nach einem der Ansprüche 1 oder 2, wobei die Mittelpunkte von nebeneinander angeordneten Ansaugöffnungen (20) und/oder Luftkanälen (22) zueinander einen Abstand im Bereich von 25 mm bis 500 mm aufweisen.

4. Verfahren nach einem der Ansprüche 1 bis 3, wobei die Vulkanisationsform (12) bezogen auf die Bahnrichtung des damit herstellbaren Laufstreifens (10) im Wesentlichen keine Krümmung aufweist.

5. Verfahren nach einem der Ansprüche 1 bis 4, wobei in Verfahrensschritt b) die Funktionsseite (18) den Laufstreifen (10) über 80 % oder mehr kontaktiert, bezogen auf die Länge des Laufstreifens (10) in Bahnrichtung.

6. Verfahren nach einem der Ansprüche 1 bis 5, wobei der Unterdruck 10 kPa oder weniger beträgt.

7. Verfahren nach einem der Ansprüche 1 bis 6, wobei das Verfahren des Grundkörpers (16) relativ zur Vulkanisationsform (12) in Verfahrensschritt d) entlang einer Bewegungsrichtung B_{R} erfolgt, wobei die Bewegungsrichtung B_{R} mit der Flächennormalen des Laufstreifens (10) übereinstimmt oder wobei die Bewegungsrichtung B_{R} mit der Flächennormalen des Laufstreifens (10) einen kleinsten Schnittwinkel von 20° oder weniger einschließt.

8. Verfahren nach einem der Ansprüche 1 bis 7, wobei das Herauslösen des Laufstreifens (10) aus der Vulkanisationsform (12) in Verfahrensschritt d) für 50 % oder mehr des Laufstreifens (10), bezogen auf die Länge des Laufstreifens (10) in Bahnrichtung, im Wesentlichen gleichzeitig erfolgt.

9. Verfahren nach einem der Ansprüche 1 bis 8, wobei das Verfahren zusätzlich den Verfahrensschritt umfasst:
e) Ablegen des herausgelösten Laufstreifens (10) auf einer Ablagefläche (26),
und/oder
f) Auflösen der reversibel und zerstörungsfrei lösbaren Verbindung zwischen der Funktionsseite (18) und dem herausgelösten Laufstreifen (10) durch Aufheben des Unterdrucks.

10. Vulkanisationsanlage (28) für Laufstreifen (10) für den Einsatz in der kalten Runderneuerung von Fahrzeugreifen, insbesondere für den Einsatz in einem Verfahren nach einem der Ansprüche 1 bis 9, umfassend:
X) eine Vulkanisationsvorrichtung mit einer Vulkanisationsform (12) zum Vulkanisieren von Laufstreifen (10), und
Y) eine Saugvorrichtung (14), wobei die Saugvorrichtung (14) umfasst:
i) einen Grundkörper (16) mit einer Funktionsseite (18), die eine Vielzahl von Ansaugöffnungen (20) aufweist, wobei der Grundkörper (16) eine Vielzahl an Luftkanälen (22) aufweist, welche sich durch den Grundkörper (16) erstrecken und jeweils mit zumindest einer der Ansaugöffnungen (20) verbunden sind, und
ii) eine fluidleitend mit den Luftkanälen (22) verbundene Unterdruckerzeugungseinheit (24) zur Erzeugung eines Unterdrucks,
wobei die Unterdruckerzeugungseinheit (24) dazu eingerichtet ist, die Ansaugöffnungen (20) mit einem Unterdruck zu beaufschlagen, sodass zwischen der Funktionsseite (18) und einem, die Funktionsseite (18) kontaktierenden, in der Vulkanisationsform (12) angeordneten, Laufstreifen (10) eine reversibel und zerstörungsfrei lösbare Verbindung ausgebildet werden kann.
